# EUROPÄISCHE PATENTSCHRIFT

(11) **EP 4 574 541 B1**
(45) Veröffentlichungstag und Bekanntmachung des Hinweises auf die Patenterteilung: **12.08.2026**
(21) Anmeldenummer: 24218745.8
(22) Anmeldetag: 10.12.2024
(51) Int. Cl.: B60L 53/14, B60L 53/16, B60L 53/18, B60L 53/30, B60L 50/20, B60L 53/67, H02G 9/04, E01C 11/22, B60L 53/31

(54) **BORDSTEIN-, PFLASTERSTEIN- ODER RANDSTEIN-LADEVORRICHTUNG ZUM LADEN EINES ENERGIESPEICHERS EINES ELEKTRISCH ANGETRIEBENEN FAHRZEUGS**
CURB, PAVING STONE OR CURB STONE CHARGING DEVICE FOR CHARGING AN ENERGY STORE OF AN ELECTRICALLY DRIVEN VEHICLE
DISPOSITIF DE CHARGEMENT DE BORDURE, DE PAVÉ OU DE BORDURE POUR CHARGER UN ACCUMULATEUR D'ÉNERGIE D'UN VÉHICULE À PROPULSION ÉLECTRIQUE

(30) Priorität: 22.12.2023 DE 102023136665
(43) Veröffentlichungstag der Anmeldung: 25.06.2025
(73) Patentinhaber: Pierburg GmbH, 41460 Neuss (DE)
(72) Erfinder: STRACKE, Dr. Felix, 41460 Neuss (DE); CHILLA, Reinhard, 41460 Neuss (DE); HOFFMANN, Jens, 41460 Neuss (DE); BRETZ, Andreas, 41460 Neuss (DE); HEMSING, Axel, 41460 Neuss (DE)
(74) Vertreter: Bardehle Pagenberg Partnerschaft mbB Patentanwälte Rechtsanwälte

(56) Entgegenhaltungen:
- EP-B1- 3 360 211
- WO-A1-2023/179896
- WO-A2-2021/156621
- DE-A1- 102016 112 613
- DE-A1- 102020 205 561

## Beschreibung

Die Erfindung betrifft eine Bordstein-, Pflasterstein- oder Randstein-Ladevorrichtung zum Laden eines Energiespeichers eines elektrisch angetriebenen Fahrzeugs mit einer Bordstein-, Pflasterstein- oder Randsteineinheit, in der ein innerer Aufnahmeraum ausgebildet ist, der durch Wände begrenzt ist, wobei in einer der Wände eine Öffnung ausgebildet ist, einer Ladebuchse, einem Schwenkteil, an dem die Ladebuchse befestigt ist, und welches ein Deckelelement aufweist, über das die Öffnung in der Wand verschließbar, wobei das Schwenkteil über ein Drehgelenk mit einer der Wände verbunden ist, so dass durch Bewegung des Schwenkteils aus der die Öffnung verschließenden Position des Deckelelementes die Ladebuchse aus dem Aufnahmeraum ausfahrbar ist.

Derartige Bordstein-, Pflasterstein- oder Randstein-Ladevorrichtungen sind im Bordstein, Pflasterstein oder im Randstein integrierte Aufladestationen oder Bord-, Pflaster- oder Randsteine, in denen zumindest eine Ladebuchse integriert ist, die an eine zentrale Ladestation angeschlossen sind. Über die Ladebuchsen kann eine elektrische Verbindung zu einem elektrisch angetriebenen Fahrzeug hergestellt werden, um dessen Energiespeicher beziehungsweise dessen Batterie aufzuladen. Dies betrifft insbesondere rein elektrisch angetriebene Fahrzeuge aber auch Hybridfahrzeuge. Aufladbare Fahrzeuge können sowohl Personenkraftwagen als auch Lastkraftwagen, Motorräder oder elektrische Fahrräder sein.

Durch die neue Gesetzgebung, das steigende Klimaschutzinteresse der Bevölkerung sowie die verbesserte Wirtschaftlichkeit elektrifizierter Fahrzeuge ist zu erwarten, dass der Anteil elektrischer Fahrzeuge insbesondere in den innerstädtischen Bereichen extrem steigen wird, so dass die zur Verfügung stehende Ladeinfrastruktur in hohem Maße ausgebaut werden muss, was bedeutet, dass ein Teil vorhandener Parkplätze oder Gehwege mit entsprechenden Auflademöglichkeiten versehen werden muss, um die individuelle Mobilität auch in Zukunft sicherzustellen.

Bekannte Konzepte sehen hierfür die Nutzung von Straßenlaternen, zusätzlich zu installierende Ladesäulen oder Wallboxen an Hauswänden vor. Bei allen diesen Konzepten entsteht zusätzlicher Platzbedarf und eine Störung der Fußgänger durch die zu verwendenden Aufladekabel.

Aus diesem Grund sind Ladesysteme bekannt geworden, bei denen die Aufladevorrichtungen oder zumindest die Ladebuchsen in den Bordstein beziehungsweise den Randstein oder den Gehweg bildende Pflastersteine integriert sind. In diesem Zusammenhang sei darauf hingewiesen, dass im Sinne der Erfindung ein Pflasterstein, Bordstein oder Randstein nicht zwangsweise ein Steinelement aufweisen muss. Dies bedeutet, dass die Pflastersteine, Bordsteine oder Randsteine auch aus verschiedenen Materialien, wie Kunststoff-, insbesondere Faserverbundkunststoff, oder Metall, Beton oder Steine enthaltende Kunststoffe zusammengesetzt werden können. Dabei können auch verschiedene Teile aus verschiedenen Materialien zusammengesetzt werden und die Pflaster-, Bordstein- oder Randsteineinheit bilden.

Die Integration der Ladebuchse oder der kompletten Ladeeinheit in den Bordstein hat den Vorteil, dass keine Ladesäulen die Gehsteige versperren und so den optischen Eindruck stören. Auch kann vermieden werden, dass Ladekabel quer über den Gehweg ragen und für Fußgänger Stolperfallen bilden. Stattdessen entsteht kein zusätzlicher Platzbedarf, sondern lediglich eine Nutzung ohnehin vorhandener Infrastruktur. Auch können Beschädigungen der Ladeinfrastruktur durch Unfälle mit Fahrzeugen vorgebeugt werden.

Aus WO 2021 156 621 A1 sind mehrere Varianten einer Bordstein-Ladevorrichtung bekannt.

Die Ladebuchsen sollten dabei einerseits zum Einleiten des Ladevorgangs einfach zugänglich sein und andererseits auch einfach zu montieren sein. Zusätzlich sind Schäden an den Ladebuchsen zu vermeiden.

So ist aus der FR 2 713 307 A1 ein Behälter bekannt, der in den Boden eingelassen wird und dessen Oberfläche als Geh- oder Fahrweg dienen kann. Dieser weist einen klappbaren Deckel auf, der im eingeklappten Zustand die Gehfläche bildet und der nach dem Aufklappen eine Ladebuchse an seiner Unterseite freigibt, die im geschlossenen Zustand in einem Aufnahmeraum des Behälters angeordnet ist. Der Deckel ist hierzu über ein Drehgelenk mit einem feststehenden Teil der Oberseite des Behälters verbunden, so dass dieser manuell, hydraulisch oder pneumatisch aufgeschwenkt werden kann.

Eine ähnliche Box ist auch aus der GB 1 402 267 B bekannt, wobei das aus dem Innenraum ausgeschwenkte Teil nach dem manuellen Öffnen über einen Schalter in seiner Stellung gehalten wird.

Aus EP 3 360 211 B1 ist eine Bordstein-Ladevorrichtung mit einem schwenkbaren Deckel bekannt, der im geöffneten Zustand den Zugriff auf die integrierte Ladebuchse freigibt. Die Öffnungsbewegung wird durch ein Federelement unterstützt.

Aus WO 2023 179896 A1 ist eine Bordstein-Ladevorrichtung bekannt, bei der ein die Ladebuchse aufweisendes Schwenkteil elektromotorisch zwischen der Öffnungsposition und der Schließposition verfahren wird.

Bei den bekannten Ausführungen ist es jedoch bei der Verwendung als Teil einer Ladeinfrastruktur im öffentlichen Raum nicht möglich, ein unbefugtes Nutzen zu verhindern. Des Weiteren sind diese Behälter für Bediener nicht angenehm zu nutzen, da der Nutzer beim Öffnen immer mit auf den Oberflächen vorhandenen Verschmutzungen in Kontakt kommt. Auch sind die Behälter nicht vor einem Eindringen von Wasser oder Schmutzstoffen gesichert, so dass mit einem Funktionsausfall und einer Blockierung des Mechanismus nach kürzerer Gebrauchsdauer zu rechnen ist. Auch besteht bei den bekannten Ausführungen die Gefahr eines Einklemmens von Fingern oder anderen Gliedmaßen oder Schäden durch Vandalismus.

Es stellt sich daher die Aufgabe, eine Bordstein-, Pflasterstein- oder Randstein-Ladevorrichtung zum Laden eines Energiespeichers eines elektrisch angetriebenen Fahrzeugs bereit zu stellen, bei der die Bedienung deutlich vereinfacht wird und Verletzungen durch Einklemmen sowie Verschmutzungen des Bedieners sowie Schäden durch Vandalismus zuverlässig verhindert werden. Des Weiteren soll eine hohe Ausfallsicherheit gewährleistet werden, in dem unter anderem das Eindringen von Dreck und Wasser sowohl im geöffneten Zustand als im geschlossenen Zustand sowie möglichst in allen Zwischenstellungen vermieden wird.

Diese Aufgabe wird durch eine Bordstein-, Pflasterstein- oder Randstein-Ladevorrichtung zum Laden eines Energiespeichers eines elektrisch angetriebenen Fahrzeugs mit den Merkmalen des Hauptanspruchs 1 gelöst.

Eine erfindungsgemäße Bordstein-, Pflasterstein- oder Randstein-Ladevorrichtung zum Laden eines Energiespeichers eines elektrisch angetriebenen Fahrzeugs weist eine Bordstein-, Pflasterstein- oder Randsteineinheit mit einer im eingebauten Zustand eine Geh- oder Fahrfläche bildenden Oberfläche auf. Diese Einheit weist einen Aufnahmeraum im Innern auf, der durch Wände begrenzt ist, die an mehreren zusammengesetzten Einzelteilen ausgebildet sein können und den Aufnahmeraum im Wesentlichen verschließen. Im Wesentlichen bedeutet in diesem Zusammenhang, dass in den Wänden Öffnungen ausgebildet sein können, die durch andere Bauteile oder Deckelteile verschlossen werden oder als Ablauf dienen. In einer der Wände, welche üblicherweise nach oben weist und die Geh- oder Fahrfläche bildet, jedoch zumindest im eingebauten Zustand der Einheit zugänglich ist, ist eine Öffnung ausgebildet. Des Weiteren weist die Bordstein-, Pflasterstein- oder Randstein-Ladevorrichtung eine Ladebuchse auf, in die ein Stecker zur Aufladung des Fahrzeugs einführbar ist. Die Ladebuchse ist an einem Schwenkteil befestigt, welches ein Deckelelement aufweist, über das die Öffnung in der Wand im eingefahrenen Zustand des Schwenkteils verschlossen ist. Das Schwenkteil ist über ein Drehgelenk mit der Wand, in der die Öffnung ausgebildet ist, verbunden. Durch Schwenken des Schwenkteils um die Drehachse des Drehgelenkes aus der die Öffnung verschließenden Position des Deckelelementes ist entsprechend die Ladebuchse aus dem Aufnahmeraum ausfahrbar und wird für den Nutzer zugänglich. Zur Durchführung des Schwenkvorgangs ist im Aufnahmeraum ein elektrisch ansteuerbarer Aktuator angeordnet, über den das Schwenkteil mit der Ladebuchse drehbar ist. Durch die elektrische Aktuierung des Schwenkteils und damit Ausschwenken der Ladebuchse wird eine externe Ansteuerung möglich, durch die der Vorgang in Gang gesetzt wird. Dies kann beispielsweise durch Identifikation eines Nutzers über eine Karte oder sein Mobiltelefon erfolgen. Über den elektrischen Aktuator ist zumindest ein Reibrad antreibbar, welches zur Drehung des Schwenkteils kraftschlüssig auf das Schwenkteil wirkt. Entsprechend wird das Schwenkteil mit der Ladebuchse durch den Antrieb und die daraus folgende Drehung des Reibrades um sein Drehgelenk gedreht.

Entsprechend ist es nicht mehr notwendig, manuell das Ausfahren der Ladebuchse durchzuführen, so dass Verschmutzungen der Hände oder ein Einklemmen der Finger zuverlässig verhindert werden. Es wird somit die Möglichkeit einer einhändigen Nutzung mit einem hohen Systemkomfort geschaffen. Auch werden Fehlbedienungen und nicht autorisierte Nutzung verhindert, wodurch auch Funktionsstörungen reduziert werden. Durch die rein kraftschlüssige beziehungsweise reibschlüssige Verbindung zwischen dem Reibrad und dem Schwenkteil wird der Schwenker weniger anfällig gegen Vandalismus beim Auf- und Zufahren, da das Reibrad durchrutschen kann, wodurch ein Bruch mechanischer Komponenten oder das Einbringen von Energie in die elektrischen Komponenten, was zu deren Beschädigung führen könnte, verhindert wird. Des Weiteren kann der Aktuator einfach abgedichtet werden und es entsteht eine sehr gute Zugänglichkeit des Systems bei der Wartung. Der Verschleiß ist gering und die Teile sind einfach und kostengünstig herstellbar und montierbar.

Vorzugsweise weist der elektrisch ansteuerbare Aktuator einen Elektromotor mit einem Getriebe auf. Diese elektrische Aktuierung ist besonders einfach und robust im Aufbau. Dabei werden wenige Bauteile im Vergleich zu hydraulischen oder pneumatischen Systemen benötigt, so dass auch der Platzbedarf deutlich reduziert wird. Zudem entfällt ein Ölwechsel bei der Wartung gegenüber einem hydraulischen System. Auch wird eine höhere Effizienz erreicht. Gegenüber pneumatischen Systemen kann auf eine Luftförderung verzichtet werden.

Des Weiteren ist es vorteilhaft, wenn die Bordstein-, Pflasterstein- oder Randsteineinheit einen Grundkörper aufweist, in dem der innere Aufnahmeraum ausgebildet ist, und einen Schutzdeckel als Wand aufweist, der den Aufnahmeraum in Richtung einer als Geh- oder Fahrfläche dienenden Oberfläche im Wesentlichen verschließt und an dem die Öffnung ausgebildet ist. Der Grundkörper kann aus Stein, einem Kunststoff, wie Faserverbundkunststoff, Beton sowie verschiedenen Stahlteilen oder Bewehrungen bestehen. Der Schutzdeckel, der insbesondere am Grundkörper lösbar befestigt werden kann, verschließt den Aufnahmeraum im Grundkörper im eingebauten Zustand geodätisch nach oben und bildet so eine Geh- oder Fahrfläche aus. Er kann insbesondere aus Stahl hergestellt werden und weist eine hohe Festigkeit auf. Eine solche Bordstein-, Pflasterstein- oder Randsteineinheit ist einfach im Aufbau und bleibt für Wartungen oder Reparaturen gut zugänglich.

Vorzugsweise ist das Getriebe des Aktuators ein Planetengetriebe. Mit diesem kann eine hohe Übersetzung erreicht werden. Des Weiteren ist dieses Getriebe platzsparend und sehr robust gegen Beschädigungen. Es wird eine hohe Drehmomentübertragung auf sehr kleinem Bauraum erreicht.

Des Weiteren ist es vorteilhaft, wenn der Aktuator über eine elastische Kupplung mit einem zweiten Getriebe verbunden ist, auf dessen Ausgangswelle das Reibrad zumindest drehfest angeordnet ist. Durch die elastische Kupplung werden geringe Versätze zwischen den beiden Getrieben beziehungsweise den Abtriebswellen der beiden Getriebe ausgeglichen. Dies verringert unerwünschte innere Kräfte in den Getrieben und verlängert so deutlich die Lebensdauer.

Vorzugsweise ist das zweite Getriebe ein Kegelradgetriebe, mit welchem besonders einfach die 90°-Umlenkung zwischen der Abtriebswelle des Aktuators und der Abtriebswelle des zweiten Getriebes auf der das Reibrad angeordnet ist, hergestellt werden kann. Kegelradgetriebe sind sehr kompakt und weisen lediglich geringe Schallemissionen auf.

In einer bevorzugten Ausbildung der Erfindung ist das Reibrad mit dem Aktuator um eine Aufhängungsdrehachse drehbar, welche parallel zu der Ausgangswelle verläuft, auf der das Reibrad angeordnet ist. Entsprechend kann der Aktuator mit dem Reibrad zur Erzeugung einer Anpresskraft des Reibrades auf das Schwenkteil um die Aufhängungsdrehachse gedreht werden. Durch die gemeinsame Drehung des Aktuators und des Reibrads wird ein Versatz zwischen diesen Teilen verhindert.

In einer bevorzugten Ausführung ist das Drehgelenk als Scharnier ausgebildet, dessen Drehachse außerhalb des Deckelelementumfangs angeordnet ist und welches mit dem Deckelelement verbunden ist. Entsprechend ergibt sich eine exzentrische Lagerung außerhalb des Deckelelementes, so dass dieses vollständig von einer Seite beim Schwenkvorgang zum Schutzdeckel oder der Wand, an der das Scharnier mit seinem anderen Ende befestigt ist, gedreht wird. Durch diese Exzentrizität kann auch die Ladebuchse deutlich höher über die Geh- oder Fahrfläche angehoben werden, was den Zugang des Nutzers erleichtert.

In einer weiterführenden Ausführung weist das Schwenkteil eine im Querschnitt kreisbogenförmige Wandfläche auf, deren Abstand zum Drehgelenk konstant ist, wobei dieser Abstand der kreisbogenförmigen Wandfläche zum Drehgelenk derart gewählt ist, dass die kreisbogenförmige Wandfläche beim Öffnungs- und Schließvorgang gegenüberliegend zu einer vom Drehgelenk entfernten, die Öffnung in der Wand begrenzenden Kante bewegt wird. Durch diese kreisbogenförmige Wandfläche des Schwenkteils wird ein Eindringen von Wasser oder Schmutz nicht nur in der Öffnungsstellung und der Schließstellung, sondern auch während des gesamten Bewegungsvorgangs des Schwenkteils weitestgehend verhindert, da lediglich ein sehr kleiner Spalt zwischen der begrenzenden Kante und dem Schwenkteil vorliegt, der eine möglichst reibungsarme Bewegung ermöglicht. Hierdurch wird die Funktionsfähigkeit der Ladevorrichtung länger erhalten. Auch wird ein Einklemmen von Gliedmaßen sowie von größeren Gegenständen wie Zweigen verhindert.

In einer hierzu weiterführenden Ausführungsform ist das Reibrad gegen die im Querschnitt kreisbogenförmige Wandfläche des Schwenkteils belastet. Die kreisbogenförmige Wandfläche dient somit als Auflagefläche des Reibrades, zu der die reibschlüssige Verbindung zum Öffnen und Schließen hergestellt wird. So können der Aktuator und das Reibrad im Wesentlichen in ihrer Position verbleiben und auf der Wandfläche abrollen, welche hierdurch um das Drehgelenk geschwenkt wird und somit das übrige Schwenkteil mitnimmt.

Um die notwendige Vorspannkraft für die kraftschlüssige Verbindung zur Verfügung zu stellen, ist das Reibrad durch eine Feder gegen die kreisbogenförmige Wandfläche belastet. Die Herstellung der Vorspannkraft durch die Feder ist einfach herzustellen und kann durch eine entsprechende Wahl der Federstärke eingestellt werden.

Die Feder ist vorzugsweise zwischen der Aufhängungsdrehachse des Aktuators und dem Reibrad angeordnet und liegt mit ihrem ersten Ende gegen eine fest zur Bordstein-, Pflasterstein- oder Randsteineinheit angeordnete Anlagefläche an und mit ihrem zweiten Ende gegen einen Träger des Aktuators an. Die Federkraft wird entsprechend von der feststehenden Anlagefläche aufgenommen und an den drehbaren Träger des Aktuators übertragen. Der Aufbau zur Einbringen dieser Anpresskraft ist somit einfach herstellbar und die Feder ist einfach zu montieren.

In einer hierzu weiterführenden Ausführung ist die Anlagefläche an einem Aufhängungsteil ausgebildet, welches am Schutzdeckel befestigt ist und welches zwei Lagerplatten aufweist, über welche die Aufhängungsdrehachse beidseitig gelagert ist. Durch die beidseitige Lagerung werden Querkräfte vermieden. Durch die Befestigung am Schutzdeckel wird der Aktuator mit dem Reibrad beim Anheben des Schutzdeckels beispielsweise für Wartungszwecke automatisch mit entnommen, wodurch die Montage und Demontage des Aktuators mit dem Reibrad deutlich vereinfacht wird.

Vorzugsweise sind auf der Ausgangswelle zwei Reibräder angeordnet sind, welche kraftschlüssig gegen die kreisbogenförmige Wandfläche des Schwenkteils belastet sind und zwei Federn sind zwischen der Aufhängungsdrehachse des Aktuators und dem Reibrad angeordnet, die jeweils mit ihrem ersten Ende gegen eine fest zur Bordstein-, Pflasterstein- oder Randsteineinheit angeordnete Anlagefläche anliegen, wobei die Reibräder und die Federn symmetrisch zu einer Mittelachse des Aktuators angeordnet sind. Durch die zwei Reibräder kann der Kraftschluss auf eine größere Fläche der kreisbogenförmigen Wandfläche aufgebracht werden. Ein Kippen durch einseitige Belastung wird durch die symmetrisch zur Antriebswelle des zweiten Getriebes angeordneten Federn und Reibräder vermieden. Stattdessen wird eine symmetrische Krafteinleitung sichergestellt. Durch die Verwendung der im äußeren Bereich der kreisbogenförmigen Wandfläche angeordneten Reibräder kann im mittleren Bereich dieser Wandfläche die Ladebuchse an einer flachen Ebene angeordnet werden und dennoch ein kraftschlüssiger Eingriff der Reibräder über den gesamten Kreisbogen sichergestellt werden.

Entsprechend ist die Ladebuchse an einem Buchsenaufnahmeelement des Schwenkteils befestigt, welches in einer Ausnehmung der kreisbogenförmigen Wandfläche angeordnet ist, welche in einem ersten Abschnitt der kreisbogenförmigen Wandfläche, welcher am nächsten zum Deckelelement angeordnet ist, ausgebildet ist, wobei sich das Buchsenaufnahmeelement senkrecht zum Deckelelement des Schwenkteils erstreckt. Entsprechend wird die Ladebuchse bei Drehung des Tragteils senkrecht nach oben weisend verschwenkt und ist so gut zugänglich. Des Weiteren kann das Buchsenaufnahmeelement als gerade Platte ausgebildet werden, an dem die Ladebuchse einfach über eine Flanschverbindung befestigt werden kann.

Des Weiteren ist es vorteilhaft, wenn am Schwenkteil ein Verriegelungsaktor angeordnet ist, über den ein Verriegelungsstift bewegbar ist, der in der vollständig ausgefahrenen Position in eine korrespondierende Öffnung eines fest zur Bordstein-, Pflasterstein- oder Randsteineinheit angeordneten Bauteils einfahrbar ist. Dieser Verriegelungsaktor kann insbesondere elektrisch angesteuert werden und greift insbesondere in eine am Schutzdeckel ausgebildete Öffnung. So wird verhindert, dass Schäden durch ungewolltes Schließen während des Ladevorgangs entstehen, da die vorhandenen Kräfte entsprechend aufgefangen werden. Ein solcher Aktuator ist vorteilhaft am zur Drehachse entgegengesetzten Ende des Schwenkteils angeordnet.

In einer bevorzugten Ausführungsform ist am Schwenkteil ein Magnet befestigt, der mit einem magnetoresistiven Sensor oder Schalter korrespondiert, der relativ zur Bordstein-, Pflasterstein- oder Randsteineinheit fest im Aufnahmeraum angeordnet ist. Eine solche Sensoreinheit kann entsprechend genutzt werden, um den ausgefahrenen Zustand des Schwenkteils zu detektieren. Sobald diese Position detektiert wird, kann der Verriegelungsaktor betätigt werden und, falls vorhanden, ein Deckel der Ladebuchse zur Öffnung freigegeben werden beziehungsweise der Ladevorgang über die Elektronikeinheit freigegeben werden.

Vorzugsweise weist das Schwenkteil das Buchsenaufnahmeelement, das Deckelelement, zwei einander gegenüberliegenden Seitenwände und die im Querschnitt kreisbogenförmige Wandfläche auf, wobei die Öffnung im Schutzdeckel in beiden Endstellungen unter Zwischenlage von Dichtungen verschlossen ist. Der elektrische Anschluss der Ladebuchse, der in Innere des Aufnahmeraums führt, ist entsprechend durch das Schwenkteil, also die Seitenwände, das Deckelelement und das Buchsenaufnahmeelement immer vor einem Eindringen von Schmutz und Flüssigkeiten geschützt. Die im Aufnahmeraum angeordnete Elektronikeinheit wird auf diese Weise ebenfalls geschützt, da keine Schmutzstoffe ins Innere des Aufnahmeraums gelangen können. Der Raum, in dem der von der Einstecköffnung entfernte Abschnitt der Ladebuchse angeordnet ist, wird durch das Schwenkteil sowie durch die den Aufnahmeraum begrenzenden Wände begrenzt, wobei das Schwenkteil die Öffnung im Schutzdeckel im Wesentlichen stetig verschließt. Im Wesentlichen bedeutet hier, dass geringe Spalte zwischen dem kreisbogenförmigen Abschnitt des Buchsenaufnahmeelementes und der Kante an der zu öffnenden schmalen Seite der Öffnung im Schutzdeckel sowie zwischen den Seitenwänden und den Kanten der Längsseiten der Öffnung für die Bewegung verbleiben müssen, die jedoch beispielsweise mittels einer Bürstendichtung oder einer umlaufenden Elastomerdichtung zumindest gegen ein Eindringen von Schmutz während des Öffnungs- oder Schließvorgangs abgedichtet werden können. Diese Spalte sind jedoch so gering, dass die gegebenenfalls eindringenden Flüssigkeitsmengen vernachlässigt werden können, da lediglich eine reibungsarme Bewegungsmöglichkeit geschaffen werden muss. Auch ist es vorteilhaft, wenn an einem vom ersten Abschnitt entfernten Ende des kreisbogenförmigen Abschnitts des Buchsenaufnahmeelementes und/oder einem sich von diesem Ende zum Deckelelement erstreckenden Ende der Seitenwände eine Erweiterung ausgebildet ist, mit der die Seitenwände und/oder der kreisbogenförmige Abschnitt im geöffneten Zustand im Aufnahmeraum gegen den Schutzdeckel anliegen. Hierdurch wird sichergestellt, dass die zur Bewegung erforderlichen Spalte zwischen den Begrenzungskanten der Öffnung sowie den Seitenwänden und dem Buchsenaufnahmeelement in der geöffneten Position des Schwenkteils vollständig geschlossen werden. Im Bereich dieser Erweiterung oder an der im geöffneten Zustand gegenüberliegenden unteren Wand des Schutzdeckels kann entsprechend die Dichtung vorgesehen werden. Eine zweite Dichtung kann im Bereich des Umfangs des Deckelelementes, mit dem dieses im geschlossenen Zustand auf dem Schutzdeckel aufliegt, vorgesehen werden.

Selbstverständlich kann diese Dichtung auch an der Auflagefläche des Deckelelementes am Schutzdeckel angebracht werden, um den dichten Verschluss sicherzustellen. Zusätzlich können diese Dichtungen auch als Anschlag zur Beendigung der Öffnungsbewegung genutzt werden, wodurch die Steuerung des Elektromotors vereinfacht werden kann.

Die Seitenwände erstrecken sich vorzugsweise über einen Viertelkreis, wobei durch die beiden Seitenwände, den klappbaren Buchsendeckel und den kreisbogenförmigen Abschnitt des Buchsenaufnahmeelementes ein an den beiden Grundflächen geschlossener Viertelzylinder ausgebildet ist. In diesem Vierteilzylinder, der lediglich an seiner im geöffneten Zustand nach unten in den Aufnahmeraum weisenden Seite offen ist, kann so der elektrische Anschluss zur Ladebuchse hergestellt werden, die entsprechend geschützt wird.

Beim Öffnungs- und Schließvorgang sind die Seitenwände vorteilhafterweise gegenüberliegend zu die Öffnung senkrecht zur Drehachse begrenzenden Kanten geführt, so dass auch hier lediglich geringe Spalte vorliegen und ein Eindringen von Schmutz in den Aufnahmeraum verhindert wird.

In einer weiteren vorteilhaften Ausführung ist ein Bereich von die Öffnung begrenzenden Kanten über ein Heizelement erwärmbar. Dies führt zu einer sicheren Funktion des Schwenkens auch bei Temperaturen unter dem Gefrierpunkt, bei denen das Deckelelement sonst im Bereich der Kanten festfrieren könnte. Ein solches Heizelement kann ein Wärmepad oder ein elektrischer Heizdraht sein oder auch durch Vorbestromung des Elektromotors gebildet werden, wenn dieser derart bestromt wird, dass die Statorwicklungen Wärme erzeugen, ohne dass eine Drehung verursacht wird. Besonders bevorzugt ist eine Integration eines Heizdrahtes in eine Elastomerdichtung im Bereich der Kanten, die zur Abdichtung des Schwenkteils dienen kann.

Die erfindungsgemäße Bordstein-, Pflasterstein- oder Randstein-Ladevorrichtung weist einen hohen Nutzungskomfort sowie eine lange Lebensdauer im Vergleich zu bekannten Ausführungen auf, da ein Eindringen von Flüssigkeiten und Schmutz in den Aufnahmeraum und damit zur Elektronik zuverlässig verhindert wird. Ein nicht vollständiges Öffnen oder Schließen durch vorhandene Verschmutzungen kann beinahe ausgeschlossen werden, so dass die Fehleranfälligkeit sehr gering ist. Die Bedienerfreundlichkeit ist ebenfalls deutlich vereinfacht und der Ladevorgang kann einhändig, ohne ein Verschmutzen der Hände befürchten zu müssen, durchgeführt werden. Vor allem werden Beschädigungen durch unsachgemäßen Gebrauch deutlich verringert, da durch das mögliche Durchrutschen des Reibrades sowohl das Schwenkteil als auch der Aktuator vor Schäden geschützt werden.

Ein nicht beschränkendes Ausführungsbeispiel einer erfindungsgemäßen Bordstein-, Pflasterstein- oder Randstein-Ladevorrichtung zum Laden eines Energiespeichers eines elektrisch angetriebenen Fahrzeugs wird am Beispiel einer Bordstein-Ladevorrichtung nachfolgend anhand der Figuren beschrieben.

Die Figur 1 zeigt eine Prinzipskizze einer Straße mit einer begrenzenden erfindungsgemäßen Bordstein-Ladevorrichtung in Draufsicht.

Die Figur 2 zeigt eine Seitenansicht einer erfindungsgemäßen Bordstein-Ladevorrichtung mit im Bereich des Schwenkteils weggeschnittener Rückwand.

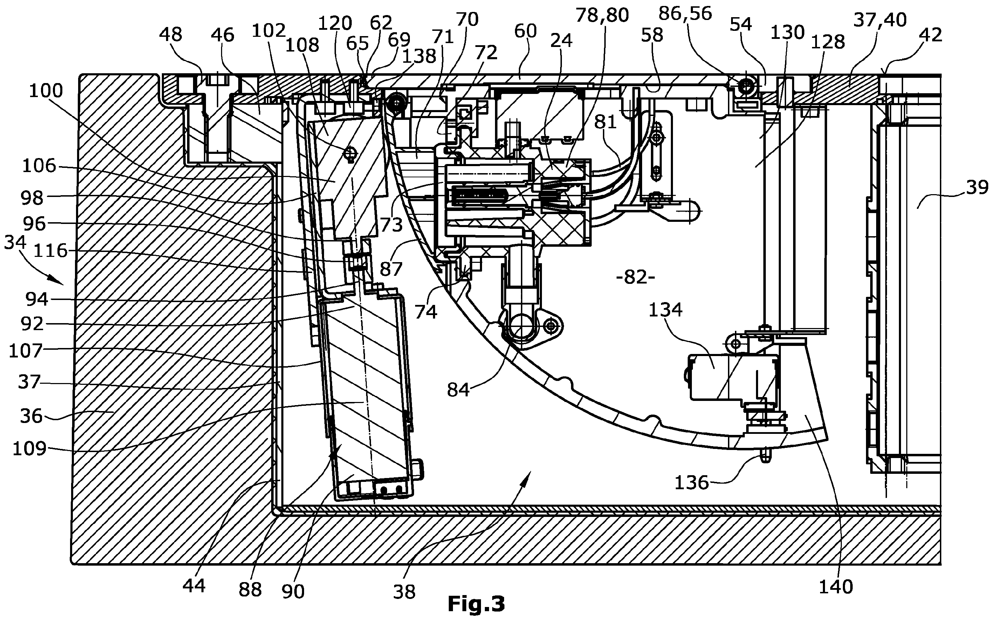

Die Figur 3 zeigt eine Seitenansicht eines Ausschnitts der erfindungsgemäßen Bordstein-Ladevorrichtung gemäß Figur 2 in teilweise geschnittener Darstellung.

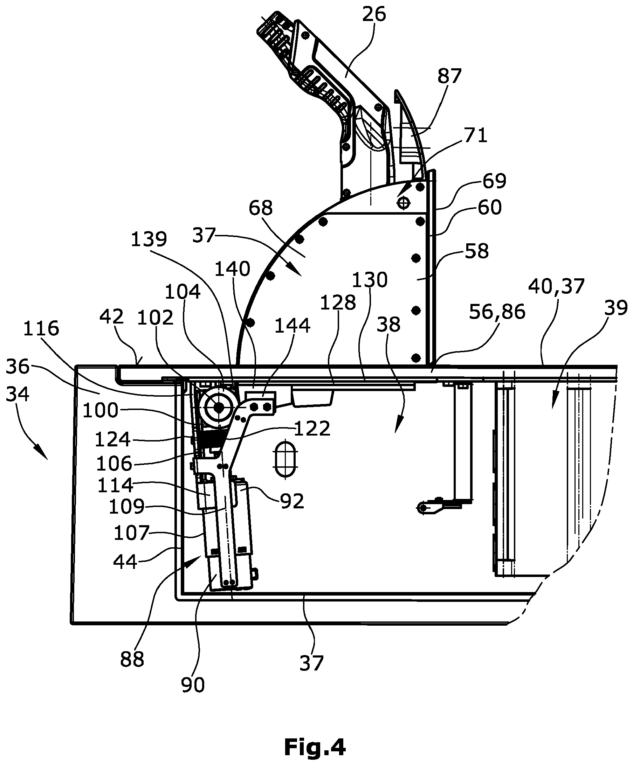

Die Figur 4 zeigt eine Seitenansicht eines Ausschnitts einer erfindungsgemäßen Bordstein-Ladevorrichtung mit im Bereich des Schwenkteils weggeschnittener Rückwand.

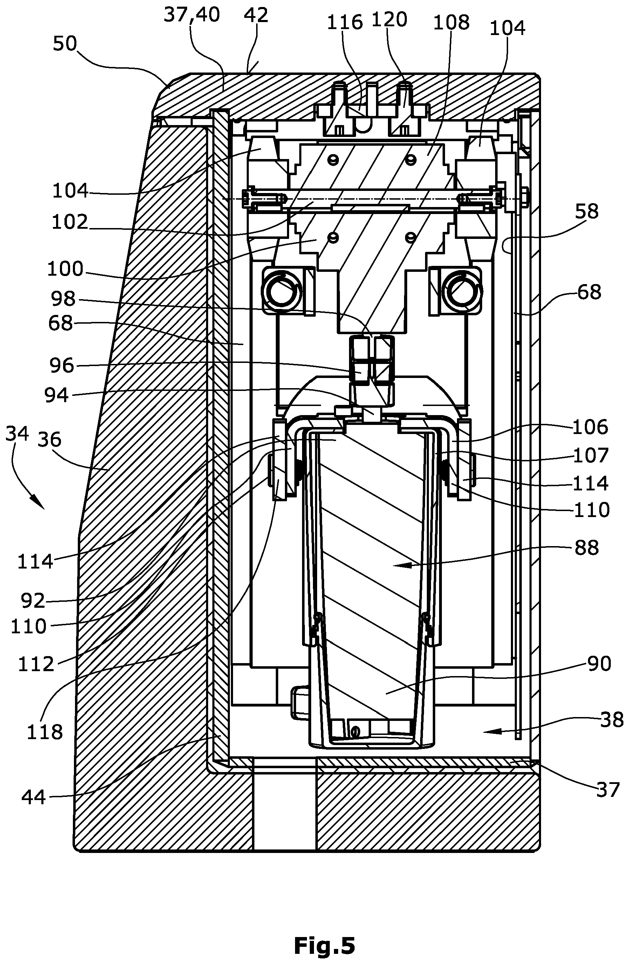

Die Figur 5 zeigt einen Schnitt entlang der Linie B-B der Figur 2.

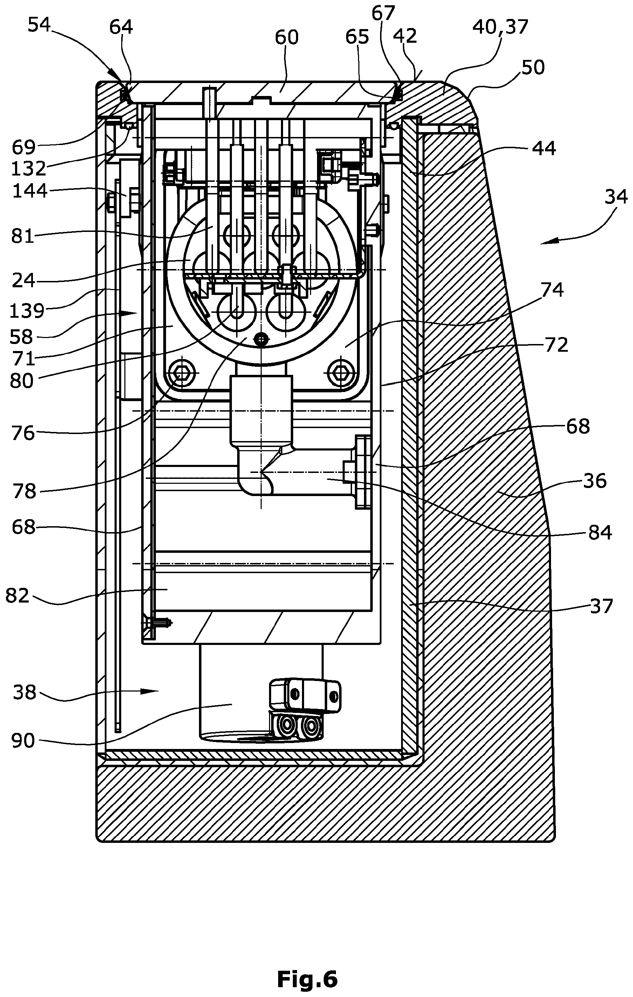

Die Figur 6 zeigt einen Schnitt entlang der Linie D-D der Figur 2.

Die Figur 7 zeigt eine dreidimensionale Ansicht des Aktuators der erfindungsgemäßen Bordstein-Ladevorrichtung gemäß Figur 2 mit Aufhängung.

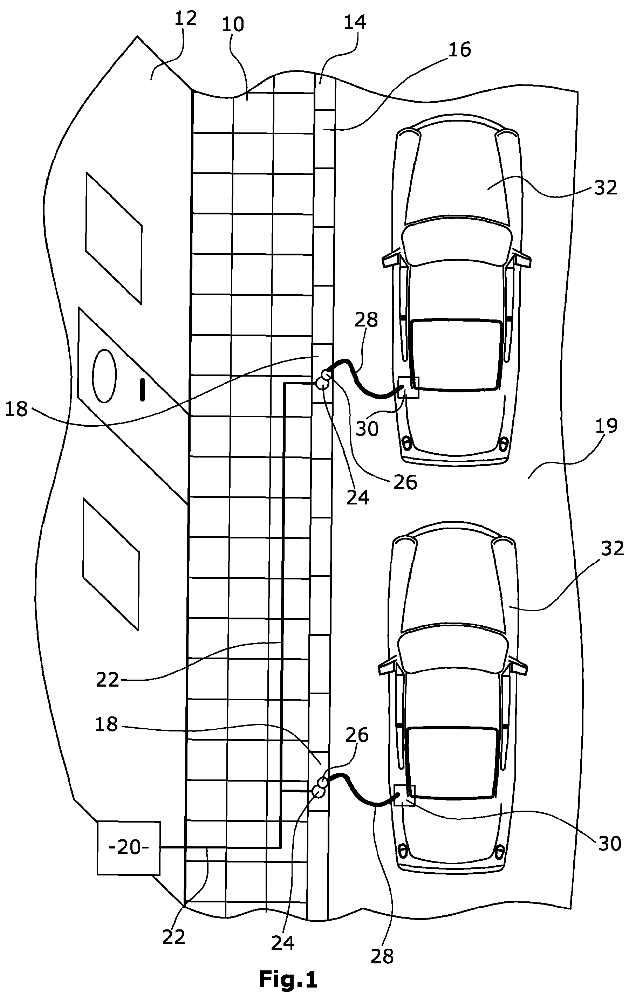

In der Figur 1 ist eine Geh- oder Fahrfläche 10 in Form eines Bürgersteigs dargestellt, der an seiner einen Seite durch eine Hauswand 12 und an der anderen Seite durch einen Bordsteinrand 14 begrenzt ist, der durch mehrere Steinelemente 16 und erfindungsgemäße Bordstein-Ladevorrichtungen 18 gebildet wird und eine Begrenzung zur Straße 19 ausbildet. An der vom Bordsteinrand 14 abgewandten Seite des Bürgersteigs befindet sich eine Energiequelle 20 in Form eines mit dem Stromnetz verbundenen Stromanschlusses. Die Energiequelle 20 ist über unterirdische Energieversorgungskabel 22 mit den Bordstein- oder Randstein-Ladevorrichtungen 18 verbunden. An den Bordstein-Ladevorrichtungen 18 sind Ladebuchsen 24 angeordnet, in die ein Stecker 26 gesteckt ist, welcher über ein Kabel 28 mit einem Energiespeicher 30, insbesondere einer Batterie eines elektrisch betriebenen Fahrzeugs 32 verbunden ist, so dass dieser Energiespeicher 30 über die Energiequelle 20 aufgeladen werden kann.

Die in den weiteren Figuren dargestellte Bordstein-Ladevorrichtung 18 besteht aus einer Bordstein-Einheit 34, welche einen Grundkörper 36, der beispielsweise aus einem Beton oder einem Kunststoff hergestellt ist und Faserverstärkungen oder Bewehrungen aufweisen kann, und in dem ein durch Wände 37 begrenzter Aufnahmeraum 38 ausgebildet ist, in den zumindest das Energieversorgungskabel 22 ragt, und eine Elektronikeinheit 39 zur Ladesteuerung angeordnet ist. Der Aufnahmeraum 38 kann insbesondere im Wesentlichen hohlquaderförmig ausgebildet sein und weist eine zur Geh- oder Fahrfläche 10 offene Seite auf, die durch einen als begrenzende Wand 37 dienenden Schutzdeckel 40 verschlossen ist, dessen nach außen weisende Oberfläche 42 den äußeren Teil der Geh- oder Fahrfläche 10 bildet.

Im vorliegenden Ausführungsbeispiel wird der Aufnahmeraum 38 durch Wände 37 eines im Grundkörper 36 verklebten Aufnahmebehälters 44 begrenzt, an dem an der zum Schutzdeckel 40 weisenden Seite Augen 46 ausgebildet sind, in denen ein Innengewinde ausgebildet ist, so dass der Schutzdeckel 40 über Schrauben 48 am Aufnahmebehälter 44 und somit am Grundkörper 36 befestigt werden kann. Der Schutzdeckel 40 bildet die obere Wand 37 des Aufnahmeraums 38, und ist insbesondere aus Stahl hergestellt. Der Schutzdeckel 40 verschließt die nach oben weisende, offene Seite des Aufnahmeraums 38 beziehungsweise des Aufnahmebehälters 44, insbesondere unter Zwischenlage einer Dichtung, welche nicht dargestellt ist. Zusätzlich liegt der Schutzdeckel 40 auch auf einer Oberseite des Grundkörpers 36 auf und erstreckt sich auch in Längserstreckungsrichtung betrachtet über die Enden des Aufnahmeraums 38.

Der Schutzdeckel 40 weist eine abgerundete Aufprallwand 50 auf, welche eine Kante zwischen der Oberseite des Grundkörpers 36 und einer zur Straße weisenden Seitenfläche des Grundkörpers 36 abdeckt. Durch den Schutzdeckel 40 wird der Aufnahmeraum 38 nach oben zur Geh- oder Fahrfläche 10 begrenzt.

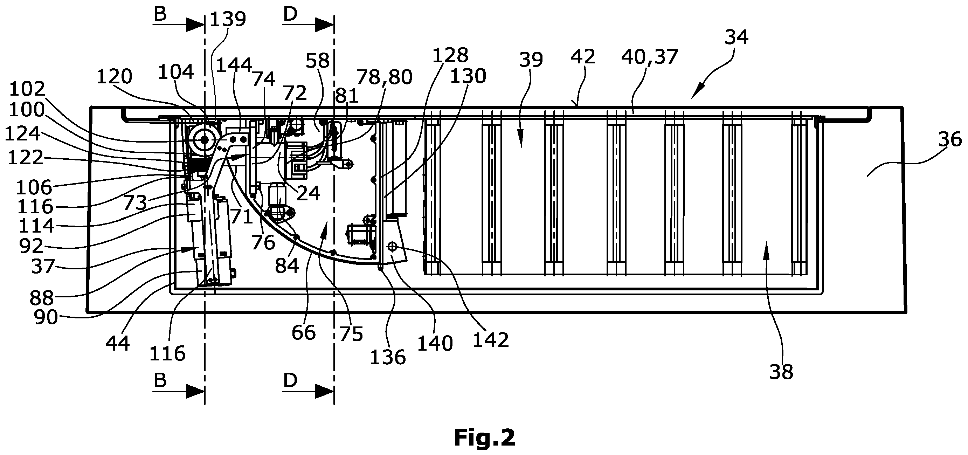

Der Schutzdeckel 40 weist eine Öffnung 54 auf, die durch ein um ein Drehgelenk 56 in Form eines Scharniers schwenkbares Schwenkteil 58 zum Aufnahmeraum 38 verdeckt ist. Dieses Schwenkteil 58 besteht aus einem Deckelelement 60, mit welchem das Schwenkteil 58 im geschlossen Zustand auf umlaufenden, die Öffnung 54 begrenzenden Kanten 62, 64 des Schutzdeckels 40 unter Zwischenlage einer Dichtung 65 aufliegt, einer im Querschnitt kreisbogenförmigen Wandfläche 66 sowie zwei einander gegenüberliegenden Seitenwänden 68, von denen eine in der Figur 2 geöffnet dargestellt ist und auch möglichst abnehmbar über Schrauben zu befestigen ist. In der Dichtung 65 ist zur Auflösung von Eis ein Heizelement 67 angeordnet. Das Deckelelement 60 ist exzentrisch gelagert, so dass eine Drehachse 86 des Deckelelementes 60 außerhalb des Deckelelementumfangs 69 angeordnet ist.

Die im Querschnitt kreisbogenförmige Wandfläche 66 weist im zentralen Bereich in einem ersten Abschnitt 70, der am nächsten zum Deckelelement 60 angeordnet ist, eine Ausnehmung 71 auf, in der ein Buchsenaufnahmeelement 72 in Form einer Platte angeordnet ist, die sich im geschlossenen Zustand, in dem das Deckelelement 60 auf den die Öffnung 54 begrenzenden Kanten 62, 64 des Schutzdeckels 40 aufliegt, senkrecht vom Deckelelement 60 in den Aufnahmeraum 38 erstreckt, während in den angrenzenden äußeren Bereichen, die die Ausnehmung 71 begrenzen, sich die im Querschnitt kreisbogenförmige Wandfläche 66 bis zum Deckelelement 60 erstreckt. An diesem Buchsenaufnahmeelement 72 ist die Ladebuchse 24 befestigt, welche mit ihrem eine Einstecköffnung 73 zum Einstecken des Steckers 26 aufweisenden Abschnitt durch die Platte ragt. Die Ladebuchse 24 ist über einen Flanschabschnitt 74 von der zur Einstecköffnung 73 entgegengesetzten Seite am Buchsenaufnahmeelement 72 mittels Schrauben 76 befestigt. Eine Befestigung durch Kleben oder Nieten wäre alternativ jedoch ebenso denkbar. An einem von der Einstecköffnung 73 entfernten Abschnitt 78 der Ladebuchse 24 ist ein elektrischer Anschluss 80 ausgebildet, von dem Leitungen 81 zur Elektronikeinheit 39 führen. Der Abschnitt 78, an dem der elektrische Anschluss 80 ausgebildet ist, befindet sich entsprechend immer in einem durch die Seitenwände 68, das Buchsenaufnahmeelement 72, die im Querschnitt kreisbogenförmige Wandfläche 66 und das Deckelelement 60 begrenzten Raum 82, welcher nach unten in Richtung des Aufnahmeraums 38 durch die Wände 37 des Aufnahmeraums 38 begrenzt ist und somit im Wesentlichen geschlossen ist. Des Weiteren ist an der Ladebuchse 24 ein Wasserablauf 84 ausgebildet.

Eine Mittelachse der kreisbogenförmige Wandfläche 66 bildet die Drehachse 86 des Drehgelenkes 56. Die kreisbogenförmige Wandfläche 66 wird ebenfalls kreisbogenförmig mit dem gleichen Mittelpunkt durch einen Buchsendeckel 87 im Wesentlichen bis zum Deckelelement 60 verlängert, der klappbar am ersten Abschnitt 70 befestigt ist und im verschlossenen Zustand die Einstecköffnung 73 der Ladebuchse 24 abdeckt. Der äußere Radius des entstehenden Viertelkreises entspricht dabei etwa dem Abstand der Kante 62, welche die Öffnung 54 an der vom Drehgelenk 56 entfernten Seite begrenzt, von der Drehachse 86 des Drehgelenkes 56 beziehungsweise ist geringfügig kleiner.

Die beiden Seitenwände 68 weisen ebenfalls eine korrespondierende Viertelkreisform auf und erstrecken sich entsprechend in einem Viertelkreis vom Deckelelement 60 bis zum entgegengesetzten Ende der im Querschnitt kreisbogenförmigen Wandfläche 66, wobei die eine Seitenwand 68 an der einen Längsseite und die andere Seitenwand 68 an der gegenüberliegenden Längsseite des Buchsenaufnahmeelementes 72 angeordnet ist, wobei unter Längsseiten die senkrecht zur Drehachse 86 sich erstreckenden Seiten zu verstehen sind. Der Abstand der Seitenwände 68 zueinander entspricht im Wesentlichen dem Abstand der beiden die Längsseiten der Öffnung 54 begrenzenden Kanten 64 beziehungsweise ist geringfügig kleiner, so dass eine möglichst reibungsarme Bewegung möglich ist, und leidglich kleine Spalte zwischen den Kanten 62, 64 und den Seitenwänden 68 beziehungsweise dem Buchsenaufnahmeelement 72 und dem vorhanden sind, die gegebenenfalls durch eine flexible Dichtung, wie eine Bürstendichtung oder eine Elastomerdichtung noch abgedichtet werden können. Das Deckelelement 60 bildet entsprechend mit den Seitenwänden und dem Buchsenaufnahmeelement einen Viertelzylinder 75, der nur zum Aufnahmeraum 38 offen ist.

Anschließend zum zum Drehgelenk entgegengesetzten Ende des Deckelelementes 60 ist im Aufnahmeraum 38 ein elektrischer Aktuator 88 angeordnet, der einen Elektromotor 90 aufweist, der ein erstes Getriebe 92 in Form eines Planetengetriebes antreibt, wodurch eine hohe Untersetzung erzeugt wird. Eine Abtriebswelle 94 ist über eine elastische Kupplung 96 mit einer Antriebswelle 98 eines zweiten Getriebes 100 in Form eines Kegelradgetriebes verbunden, auf dessen Ausgangswelle 102 zwei Reibräder 104 befestigt sind, wovon jeweils eines an gegenüberliegenden Seiten der Antriebswelle 98 auf den Enden der Ausgangswelle 102 angeordnet ist, welche parallel zum Drehgelenk 56 verläuft.

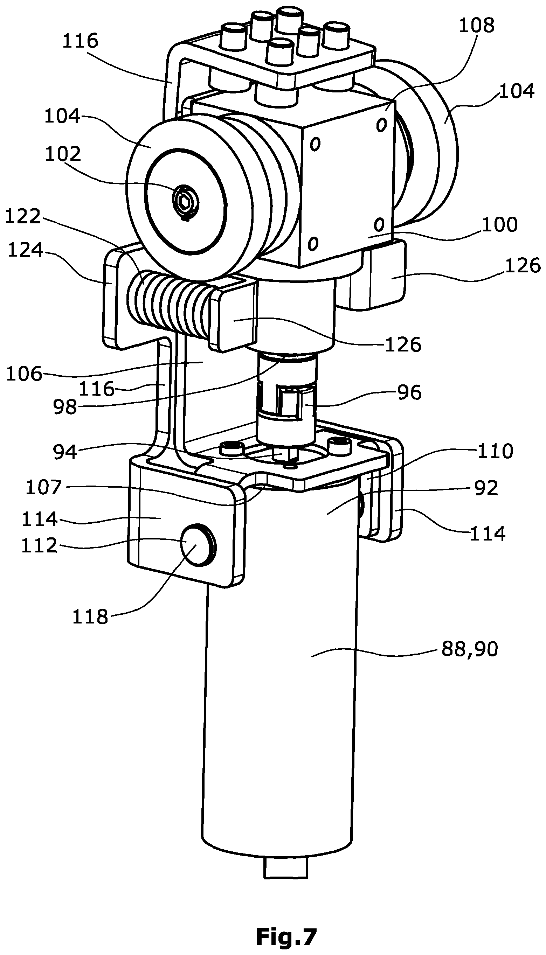

Wie in der Figur 7 zu erkennen ist, ist der Aktuator 88 mit dem zweiten Getriebe 100 über einen Träger 106 verbunden, der einerseits an einem Kopfende eines Gehäuse 107 des ersten Getriebes 92 und andererseits einem Gehäuse 108 des zweiten Getriebes 100 verschraubt ist. Der Träger 106 weist zwei sich vom Kopfende entlang des Gehäuses 107 und damit beidseits einer Mittelachse 109 des Aktuators 88 erstreckende Laschen 110 auf, die über Stifte 112 mit zwei Lagerplatten 114 eines Aufhängungsteils 116 drehbar verbunden sind. Das Aufhängungsteil 116 erstreckt sich von einer Aufhängungsdrehachse 118, die durch die Stifte 112 gebildet wird bis über das zweite Getriebe 100 und weist oberhalb des zweiten Getriebes 100 eine 90° Biegung auf, über die das Aufhängungsteil 116 und damit der Aktuator 88 mit den Reibrädern 104 mittels Schrauben 120 am Schutzdeckel 40 befestigt ist. Somit ist der Aktuator 88 mit dem zweiten Getriebe 100 und den Reibrädern 104 um die Aufhängungsdrehachse 118 schwenkbar im Aufnahmeraum 38 gelagert.

Die beiden Reibräder 104 werden über zwei Federn 122 gegen die im Querschnitt kreisbogenförmige Wandfläche 66 des Schwenkteils 58 an deren zu den Seitenwänden 68 gerichteten Enden 58 gedrückt. Hierzu liegen die Federn 122 jeweils an einer Anlagefläche 124 an, die an dem Aufhängungsteil 116 ausgebildet sind und somit feststehend im Aufnahmeraum 38 angeordnet sind, während die entgegengesetzten zweiten Enden der Federn 122 gegen entsprechend geformte Laschen 126 des Trägers 106 anliegen, welche zwischen den beiden Getrieben 92, 100 und somit zwischen den Reibrädern 104 und dem Aktuator 88 angeordnet sind.

Soll nun ein Ladevorgang vollzogen werden, wird der Elektromotor 90 bestromt, wodurch die Reibräder 104 in Drehung versetzt werden. Durch den Kraftschluss der Reibräder 104 zur kreisbogenförmigen Wandfläche 66, der durch die Federn 122 erzeugt wird, wird das Schwenkteil 58 um die Drehachse 86 gedreht, so dass das Deckelelement 60 von der Öffnung 54 abgehoben wird. Die Seitenwände 68 gleiten entlang der Kante 64 und das Buchsenaufnahmeelement 66 beziehungsweise der Buchsendeckel 88 gleitet entlang der Kante 62 der Öffnung 54. Dabei werden die Reibräder kontinuierlich gegen die kreisbogenförmige Wandfläche 66 gedrückt und rollen auf dieser ab. Nach Durchfahren eines Winkels von 90° erreicht ein den Viertelzylinder 75 am zum Deckelelement 60 entgegengesetzten Ende 128, welches zum Aufnahmeraum offen ist, die die Öffnung 54 umgebenden Kanten. An diesem geraden Ende 128 des Schwenkteils 58 ist eine im Vergleich zu den Seitenwänden 68 nach radial außen gerichtete Erweiterung 130 ausgebildet, mit der das Schwenkteil 68 im voll ausgefahrenen Zustand gegen die Kanten 62, 64 von in Anlage gebracht wird. In diesem Bereich ist an der Unterseite der Kanten 62, 64 eine umlaufende Dichtung 132 angebracht, so dass in dieser Position ein Weiterdehen des Schwenkteils 58 nicht möglich ist und die Öffnung 54 wieder vollständig abgedichtet ist.

In jedem Zustand ist somit maximal ein geringer Spalt zwischen dem Schwenkteil 58 und den die Öffnung 54 begrenzenden Kanten 62, 64 vorhanden, während in den Endstellungen ein vollständiger Verschluss der Öffnung 54 gegeben ist. So wird ein Eindringen von Wasser und vor allem von Schmutz in den Aufnahmeraum 38 weitestgehend unterbunden. Nach Aufklappen des Buchsendeckels 88 kann der Stecker 26 in die Ladebuchse gesteckt und der Energiespeicher 30 des Fahrzeugs 32 geladen werden. Um ein Rückdrehen des Schwenkteils 58 in den Aufnahmeraum 38 zu verhindern, ist kurz vor dem geraden Ende 128 ein Verriegelungsaktor 134 am vom Drehgelenk entfernten Ende des Schwenkteils 58 angeordnet, der einen elektrisch ein- und ausfahrbaren Verriegelungsstift 136 aufweist, der in dieser Position in eine korrespondierende Öffnung 138 an einem fest zur Bordsteineinheit angeordneten Bauteil 139, welches vorliegend durch den Schutzdeckel 40 gebildet ist, greift und über den auf diese Weise ein unerwünschtes Einfahren vermieden wird. Um den Zeitpunkt dieser Betätigung zu detektieren, ist am Schwenkteil 58 ein Verlängerungsabschnitt 140 ausgebildet, der sich über den Viertelzylinder 75 hinaus erstreckt und an dem ein Magnet 142 befestigt ist. Dieser Magnet 142 wirkt mit einem magnetoresistiven Sensor 144 oder Schalter, wie einem Hall-Schalter zusammen, welcher fest zur Bordsteineinheit 34 angeordnet und somit nicht beweglich ist. Im vorliegenden Ausführungsbeispiel ist der Sensor 144 an einer Position am Aufhängungsteil 116 befestigt, dass der Magnet in der vollständig ausgefahrenen Position eine Auslösung des Sensors 114 verursacht, also beispielsweise diesem in dieser Position gegenüberliegt. Nach Beendigung des Ladevorgangs wird der Verriegelungsstift 136 über den Verriegelungsaktor 134 wieder eingefahren und der Elektromotor 90 entgegengesetzt gedreht, bis das Deckelelement 60 wieder die Öffnung 54 verschließt.

Die Aktuierung kann über ein entsprechendes Authentifizierungssystem mittels eines Mobiltelefons oder einer Chipkarte gestartet werden. Für den Nutzer entsteht nach dem Ausfahren eine gute Erreichbarkeit der Ladebuchse. Ein manuelles Eingreifen zur Öffnung und zum Schließen ist nicht erforderlich, so dass Verletzungen durch Einklemmen oder ähnliches sowie Verschmutzungen durch dreckige Ladebuchsen oder Deckel, die vom Nutzer berührt werden müssen, vermieden werden. Die Ladevorrichtung ist dennoch sehr robust, da Störungen durch das Eindringen von Schmutz oder Flüssigkeiten ebenso vermieden werden wie Beschädigungen durch ein Blockieren des Schwenkteils beim Ausfahren, da in diesem Zustand das Reibrad durchrutschen kann.

Es wird darauf hingewiesen, dass das Drehgelenk auch über entsprechende Halter im Innern des Aufnahmeraums befestigt werden kann, jedoch zum Schutzdeckel definiert auszurichten beziehungsweise an diesem zusätzlich zu befestigen ist. Auch sind selbstverständlich verschiedene Modifikationen möglich. So kann auch nur ein zentrales Reibrad verwendet werden, welches auch auf dem Buchsendeckel abrollen kann.

## Patentansprüche

1. Bordstein-, Pflasterstein- oder Randstein-Ladevorrichtung (18) zum Laden eines Energiespeichers (30) eines elektrisch angetriebenen Fahrzeugs (32) mit
einer Bordstein-, Pflasterstein- oder Randsteineinheit (34), in der ein innerer Aufnahmeraum (38) ausgebildet ist, der durch Wände (37) begrenzt ist, wobei in einer der Wände (37) eine Öffnung (54) ausgebildet ist,
einer Ladebuchse (24),
einem Schwenkteil (58), an dem die Ladebuchse (24) befestigt ist, und welches ein Deckelelement (60) aufweist, über das die Öffnung (54) in der Wand (37) verschließbar ist, wobei das Schwenkteil (58) über ein Drehgelenk (56) mit der Wand (37), in der die Öffnung (54) ausgebildet ist, verbunden ist, so dass durch Bewegung des Schwenkteils (58), aus der die Öffnung (54) verschließenden Position des Deckelelementes (60) die Ladebuchse (24) aus dem Aufnahmeraum (38) ausfahrbar ist,
wobei im Aufnahmeraum (38) ein elektrisch ansteuerbarer Aktuator (88) angeordnet ist, über den zumindest ein Reibrad (104) antreibbar ist, welches zur Drehung des Schwenkteils (58) kraftschlüssig auf das Schwenkteil (58) wirkt, so dass das Schwenkteil (58) mit der Ladebuchse (24) drehbar ist.

2. Bordstein-, Pflasterstein- oder Randstein-Ladevorrichtung (18) zum Laden eines Energiespeichers (30) eines elektrisch angetriebenen Fahrzeugs (32) nach Anspruch 1,
**dadurch gekennzeichnet, dass**
der elektrisch ansteuerbare Aktuator (88) einen Elektromotor (90) mit einem Getriebe (92) aufweist.

3. Bordstein-, Pflasterstein- oder Randstein-Ladevorrichtung (18) zum Laden eines Energiespeichers (30) eines elektrisch angetriebenen Fahrzeugs (32) nach Anspruch 1,
**dadurch gekennzeichnet, dass**
die Bordstein-, Pflasterstein- oder Randsteineinheit (34) einen Grundkörper (36) aufweist, in dem der innere Aufnahmeraum (38) ausgebildet ist, und einen Schutzdeckel (40) als Wand (37) aufweist, der den Aufnahmeraum (38) in Richtung einer als Geh- oder Fahrfläche (10) dienenden Oberfläche (42) im Wesentlichen verschließt und an dem die Öffnung (54) ausgebildet ist.

4. Bordstein-, Pflasterstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
der Aktuator (88) über eine elastische Kupplung (96) mit einem zweiten Getriebe (100) verbunden ist, auf dessen Ausgangswelle (102) das Reibrad (104) zumindest drehfest angeordnet ist.

5. Bordstein-, Pflasterstein- oder Randstein-Ladevorrichtung (18) zum Laden eines Energiespeichers (30) eines elektrisch angetriebenen Fahrzeugs (32) nach Anspruch 4,
**dadurch gekennzeichnet, dass**
das Reibrad (104) mit dem Aktuator (88) um eine Aufhängungsdrehachse (118) drehbar ist, welche parallel zu der Ausgangswelle (102) verläuft, auf der das Reibrad (104) angeordnet ist.

6. Bordstein-, Pflasterstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
das Drehgelenk (56) als Scharnier ausgebildet ist, dessen Drehachse (86) außerhalb des Deckelelementumfangs (69) angeordnet ist und welches mit dem Deckelelement (60) verbunden ist.

7. Bordstein-, Pflasterstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
das Schwenkteil (58) eine im Querschnitt kreisbogenförmige Wandfläche (66) aufweist, deren Abstand zum Drehgelenk (56) konstant ist, wobei dieser Abstand der kreisbogenförmigen Wandfläche (66) zum Drehgelenk (56) derart gewählt ist, dass die kreisbogenförmige Wandfläche (66) beim Öffnungs- und Schließvorgang gegenüberliegend zu einer vom Drehgelenk (56) entfernten, die Öffnung (54) in der Wand (37) begrenzenden Kante (62) bewegt wird.

8. Bordstein-, Pflasterstein- oder Randstein-Ladevorrichtung (18) zum Laden eines Energiespeichers (30) eines elektrisch angetriebenen Fahrzeugs (32) nach Anspruch 7,
**dadurch gekennzeichnet, dass**
das Reibrad (104) gegen die im Querschnitt kreisbogenförmige Wandfläche (66) des Schwenkteils (58) belastet ist.

9. Bordstein-, Pflasterstein- oder Randstein-Ladevorrichtung (18) zum Laden eines Energiespeichers (30) eines elektrisch angetriebenen Fahrzeugs (32) nach Anspruch 8,
**dadurch gekennzeichnet, dass**
das Reibrad (104 durch eine Feder (122) gegen die kreisbogenförmige Wandfläche (66) belastet ist, und
die Feder (122) zwischen der Aufhängungsdrehachse (118) des Aktuators (88) und dem Reibrad (104) angeordnet ist und mit ihrem ersten Ende gegen eine fest zur Bordstein-, Pflasterstein- oder Randsteineinheit (34) angeordnete Anlagefläche (124) anliegt und mit ihrem zweiten Ende gegen einen Träger (106) des Aktuators (88) anliegt.

10. Bordstein-, Pflasterstein- oder Randstein-Ladevorrichtung (18) zum Laden eines Energiespeichers (30) eines elektrisch angetriebenen Fahrzeugs (32) nach Anspruch 9,
**dadurch gekennzeichnet, dass**
die Anlagefläche (124) an einem Aufhängungsteil (116) ausgebildet ist, welches am Schutzdeckel (40) befestigt ist und welches zwei Lagerplatten (114) aufweist, über welche die Aufhängungsdrehachse (118) beidseitig gelagert ist.

11. Bordstein-, Pflasterstein- oder Randstein-Ladevorrichtung (18) zum Laden eines Energiespeichers (30) eines elektrisch angetriebenen Fahrzeugs (32) nach einem der Ansprüche 7 bis 10,
**dadurch gekennzeichnet, dass**
auf der Ausgangswelle (102) zwei Reibräder (104) angeordnet sind, welche kraftschlüssig gegen die kreisbogenförmige Wandfläche (66) des Schwenkteils (58) belastet sind und zwei Federn (122) zwischen der Aufhängungsdrehachse (118) des Aktuators (88) und den Reibrädern (104) angeordnet sind, die jeweils mit ihrem ersten Ende gegen eine fest zur Bordstein-, Pflasterstein- oder Randsteineinheit (34) angeordnete Anlagefläche (124) anliegen und mit ihrem zweiten Ende gegen einen Träger (106) des Aktuators (88) anliegen, wobei die Reibräder (104) und die Federn (122) symmetrisch zu einer Mittelachse (109) des Aktuators (88) angeordnet sind.

12. Bordstein-, Pflasterstein- oder Randstein-Ladevorrichtung (18) zum Laden eines Energiespeichers (30) eines elektrisch angetriebenen Fahrzeugs (32) nach einem der Ansprüche 7 bis 11,
**dadurch gekennzeichnet, dass**
die Ladebuchse (24) an einem Buchsenaufnahmeelement (72) des Schwenkteils (58) befestigt ist, welches in einer Ausnehmung (71) der kreisbogenförmigen Wandfläche (66) angeordnet ist, welche in einem ersten Abschnitt (70) der kreisbogenförmigen Wandfläche (66), welcher im geschlossenen Zustand am nächsten zum Deckelelement (60) angeordnet ist, ausgebildet ist, wobei sich das Buchsenaufnahmeelement (72) senkrecht zum Deckelelement (60) des Schwenkteils (58) erstreckt.

13. Bordstein-, Pflasterstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
am Schwenkteil (58) ein Verriegelungsaktor (134) angeordnet ist, über den ein Verriegelungsstift (136) bewegbar ist, der in der vollständig ausgefahrenen Position in eine korrespondierende Öffnung (138) eines fest zur Bordstein-, Pflasterstein- oder Randsteineinheit (34) angeordneten Bauteils (139) einfahrbar ist.

14. Bordstein-, Pflasterstein- oder Randstein-Ladevorrichtung (18) zum Laden eines Energiespeichers (30) eines elektrisch angetriebenen Fahrzeugs (32) nach einem der vorhergehenden Ansprüche,
**dadurch gekennzeichnet, dass**
am Schwenkteil (58) ein Magnet (142) befestigt ist, der mit einem magnetoresistiven Sensor (144) oder Schalter korrespondiert, der relativ zur Bordstein-, Pflasterstein- oder Randsteineinheit (34) fest im Aufnahmeraum (38) angeordnet ist.

15. Bordstein-, Pflasterstein- oder Randstein-Ladevorrichtung (18) zum Laden eines Energiespeichers (30) eines elektrisch angetriebenen Fahrzeugs (32) nach Anspruch 12,
**dadurch gekennzeichnet, dass**
das Schwenkteil (58) das Buchsenaufnahmeelement (72), das Deckelelement (60), zwei einander gegenüberliegenden Seitenwände (68) und die im Querschnitt kreisbogenförmige Wandfläche (66) aufweist, wobei die Öffnung (54) im Schutzdeckel (40) in beiden Endstellungen unter Zwischenlage von Dichtungen (65, 132) verschlossen ist.

## Claims

1. Curb, paving stone or curbstone charging device (18) for charging an energy store (30) of an electrically driven vehicle (32), comprising
a curb, paving stone or curbstone unit (34), in which an inner receiving space (38) is formed, which is delimited by walls (37), wherein an opening (54) is formed in one of the walls (37),
a charging socket (24),
a pivot part (58), to which the charging socket (24) is fastened, and which has a cover element (60), via which the opening (54) in the wall (37) can be closed, wherein the pivot part (58) is connected via a pivot joint (56) to the wall (37), in which the opening (54) is formed, so that the charging socket (24) can be extended out of the receiving space (38) by moving the pivot part (58) out of the position of the cover element (60) closing the opening (54),
**wherein**
an electrically controllable actuator (88) is arranged in the receiving space (38), via which at least one friction wheel (104) can be driven, which friction wheel acts on the pivot part (58) in a force-locking manner for rotating the pivot part (58), so that the pivot part (58) can be rotated with the charging socket (24).

2. Curb, paving stone or curbstone charging device (18) for charging an energy store (30) of an electrically driven vehicle (32) according to Claim 1,
**characterized in that**
the electrically controllable actuator (88) has an electric motor (90) with a gear mechanism (92).

3. Curb, paving stone or curbstone charging device (18) for charging an energy store (30) of an electrically driven vehicle (32) according to Claim 1,
**characterized in that**
the curb, paving stone or curbstone unit (34) has a main body (36), in which the inner receiving space (38) is formed, and has a protective cover (40) as a wall (37), which substantially closes the receiving space (38) in the direction of a surface (42) serving as a walking or driving surface (10) and on which the opening (54) is formed.

4. Curb, paving stone or curbstone charging device (18) for charging an energy store (30) of an electrically driven vehicle (32) according to one of the preceding claims,
**characterized in that**
the actuator (88) is connected via an elastic coupling (96) to a second gear mechanism (100), on the output shaft (102) of which the friction wheel (104) is arranged at least in a rotationally fixed manner.

5. Curb, paving stone or curbstone charging device (18) for charging an energy store (30) of an electrically driven vehicle (32) according to Claim 4,
**characterized in that**
the friction wheel (104) can be rotated with the actuator (88) about a suspension axis of rotation (118), which runs parallel to the output shaft (102) on which the friction wheel (104) is arranged.

6. Curb, paving stone or curbstone charging device (18) for charging an energy store (30) of an electrically driven vehicle (32) according to one of the preceding claims,
**characterized in that**
the pivot joint (56) is formed as a hinge, the axis of rotation (86) of which is arranged outside the cover element circumference (69) and which is connected to the cover element (60).

7. Curb, paving stone or curbstone charging device (18) for charging an energy store (30) of an electrically driven vehicle (32) according to one of the preceding claims,
**characterized in that**
the pivot part (58) has a wall surface (66) which is arcuate in cross section and the distance of which from the pivot joint (56) is constant, wherein this distance of the arcuate wall surface (66) from the pivot joint (56) is selected in such a way that the arcuate wall surface (66) is moved during the opening and closing operation opposite an edge (62) which is remote from the pivot joint (56) and delimits the opening (54) in the wall (37).

8. Curb, paving stone or curbstone charging device (18) for charging an energy store (30) of an electrically driven vehicle (32) according to Claim 7,
**characterized in that**
the friction wheel (104) is loaded against the wall surface (66) of the pivot part (58) which is arcuate in cross section.

9. Curb, paving stone or curbstone charging device (18) for charging an energy store (30) of an electrically driven vehicle (32) according to Claim 8,
**characterized in that**
the friction wheel (104) is loaded by a spring (122) against the arcuate wall surface (66), and
the spring (122) is arranged between the suspension axis of rotation (118) of the actuator (88) and the friction wheel (104) and bears with its first end against a bearing surface (124) arranged fixedly with respect to the curb, paving stone or curbstone unit (34) and bears with its second end against a carrier (106) of the actuator (88).

10. Curb, paving stone or curbstone charging device (18) for charging an energy store (30) of an electrically driven vehicle (32) according to Claim 9,
**characterized in that**
the bearing surface (124) is formed on a suspension part (116), which is fastened to the protective cover (40) and which has two bearing plates (114), via which the suspension axis of rotation (118) is mounted on both sides.

11. Curb, paving stone or curbstone charging device (18) for charging an energy store (30) of an electrically driven vehicle (32) according to one of Claims 7 to 10,
**characterized in that**
two friction wheels (104) are arranged on the output shaft (102), which friction wheels are loaded in a force-locking manner against the arcuate wall surface (66) of the pivot part (58), and two springs (122) are arranged between the suspension axis of rotation (118) of the actuator (88) and the friction wheels (104), which springs each bear with their first end against a bearing surface (124) arranged fixedly with respect to the curb, paving stone or curbstone unit (34) and bear with their second end against a carrier (106) of the actuator (88), wherein the friction wheels (104) and the springs (122) are arranged symmetrically with respect to a central axis (109) of the actuator (88).

12. Curb, paving stone or curbstone charging device (18) for charging an energy store (30) of an electrically driven vehicle (32) according to one of Claims 7 to 11,
**characterized in that**
the charging socket (24) is fastened to a socket receiving element (72) of the pivot part (58), which socket receiving element is arranged in a recess (71) of the arcuate wall surface (66), which recess is formed in a first section (70) of the arcuate wall surface (66), which is arranged closest to the cover element (60) in the closed state, wherein the socket receiving element (72) extends perpendicularly to the cover element (60) of the pivot part (58).

13. Curb, paving stone or curbstone charging device (18) for charging an energy store (30) of an electrically driven vehicle (32) according to one of the preceding claims,
**characterized in that**
a locking actuator (134) is arranged on the pivot part (58), via which locking actuator a locking pin (136) can be moved, which locking pin, in the fully extended position, can be retracted into a corresponding opening (138) of a component (139) arranged fixedly with respect to the curb, paving stone or curbstone unit (34).

14. Curb, paving stone or curbstone charging device (18) for charging an energy store (30) of an electrically driven vehicle (32) according to one of the preceding claims,
**characterized in that**
a magnet (142) is fastened to the pivot part (58), which magnet corresponds to a magnetoresistive sensor (144) or switch, which is arranged fixedly in the receiving space (38) relative to the curb, paving stone or curbstone unit (34).

15. Curb, paving stone or curbstone charging device (18) for charging an energy store (30) of an electrically driven vehicle (32) according to Claim 12,
**characterized in that**
the pivot part (58) has the socket receiving element (72), the cover element (60), two mutually opposite side walls (68) and the wall surface (66) which is arcuate in cross section, wherein the opening (54) in the protective cover (40) is closed in both end positions with the interposition of seals (65, 132).

## Revendications

1. Dispositif de recharge en bordure, pavage ou bord de trottoir (18) pour recharger un accumulateur d'énergie (30) d'un véhicule à propulsion électrique (32) avec une unité de bordure, de pavage ou de bord de trottoir (34), dans laquelle est formé un espace de réception intérieur (38), qui est délimité par des parois (37), dans lequel une ouverture (54) est réalisée dans l'une des parois (37),
une prise de recharge (24),
une partie pivotante (58), sur laquelle est fixée la prise de recharge (24) et qui comporte un élément de couvercle (60) permettant de fermer l'ouverture (54) dans la paroi (37), dans lequel la partie pivotante (58) est reliée par une articulation pivotante (56) à la paroi (37), dans laquelle l'ouverture (54) est réalisée de telle sorte que le déplacement de la partie pivotante (58) hors de la position, fermant l'ouverture (54), de l'élément de couvercle (60) permet de sortir la prise de recharge (24) de l'espace de réception (38),
dans lequel est disposé dans l'espace de réception (38) un actionneur (88) à commande électrique, par l'intermédiaire duquel au moins une roue de friction (104) peut être entraînée, laquelle agit à force sur la partie pivotante (58) pour la rotation de la partie pivotante (58), de telle sorte que la partie pivotante (58) peut tourner avec la prise de recharge (24).

2. Dispositif de recharge en bordure, pavage ou bord de trottoir (18) pour recharger un accumulateur d'énergie (30) d'un véhicule à propulsion électrique (32) selon la revendication 1,
**caractérisé en ce que**
l'actionneur (88) à commande électrique comporte un moteur électrique (90) avec une transmission (92).

3. Dispositif de recharge en bordure, pavage ou bord de trottoir (18) pour recharger un accumulateur d'énergie (30) d'un véhicule à propulsion électrique (32) selon la revendication 1,
**caractérisé en ce que**
l'unité de bordure, de pavage ou de bord de trottoir (34) comporte un corps de base (36) dans lequel l'espace de réception intérieur (38) est réalisé, et comporte un couvercle de protection (40) en tant que paroi (37), qui ferme sensiblement l'espace de réception (38) en direction d'une surface (42) servant de surface de marche ou de déplacement (10) et sur laquelle l'ouverture (54) est réalisée.

4. Dispositif de recharge en bordure, pavage ou bord de trottoir (18) pour recharger un accumulateur d'énergie (30) d'un véhicule à propulsion électrique (32) selon l'une des revendications précédentes,
**caractérisé en ce que**
l'actionneur (88) est relié par un accouplement élastique (96) à une deuxième transmission (100), sur l'arbre de sortie (102) de laquelle la roue de friction (104) est disposée au moins de manière solidaire en rotation.

5. Dispositif de recharge en bordure, pavage ou bord de trottoir (18) pour recharger un accumulateur d'énergie (30) d'un véhicule à propulsion électrique (32) selon la revendication 4,
**caractérisé en ce que**
la roue de friction (104) peut tourner avec l'actionneur (88) autour d'un axe de rotation de suspension (118), qui s'étend parallèlement à l'arbre de sortie (102) sur lequel la roue de friction (104) est disposée.

6. Dispositif de recharge en bordure, pavage ou bord de trottoir (18) pour recharger un accumulateur d'énergie (30) d'un véhicule à propulsion électrique (32) selon l'une des revendications précédentes,
**caractérisé en ce que**
l'articulation pivotante (56) est réalisée en tant que charnière dont l'axe de rotation (86) est disposé à l'extérieur de la périphérie d'élément de couvercle (69) et qui est reliée à l'élément de couvercle (60).

7. Dispositif de recharge en bordure, pavage ou bord de trottoir (18) pour recharger un accumulateur d'énergie (30) d'un véhicule à propulsion électrique (32) selon l'une des revendications précédentes,
**caractérisé en ce que**
la partie pivotante (58) comporte une surface murale (66) en forme d'arc de cercle dans la section transversale dont la distance par rapport à l'articulation pivotante (56) est constante, dans lequel ladite distance de la surface de paroi (66) en forme d'arc de cercle par rapport à l'articulation pivotante (56) est choisie de telle manière que la surface de paroi (66) en forme d'arc de cercle est déplacée lors du processus d'ouverture et de fermeture en sens opposé à un rebord (62) éloigné de l'articulation pivotante (56), délimitant l'ouverture (54) dans la paroi (37).

8. Dispositif de recharge en bordure, pavage ou bord de trottoir (18) pour recharger un accumulateur d'énergie (30) d'un véhicule à propulsion électrique (32) selon la revendication 7,
**caractérisé en ce que**
la roue de friction (104) est contrainte contre la surface de paroi (66) en forme d'arc dans la section transversale de la partie pivotante (58).

9. Dispositif de recharge en bordure, pavage ou bord de trottoir (18) pour recharger un accumulateur d'énergie (30) d'un véhicule à propulsion électrique (32) selon la revendication 8,
**caractérisé en ce que**
la roue de friction (104) est contrainte par un ressort (122) contre la surface de paroi (66) en forme d'arc de cercle, et
le ressort (122) est disposé entre l'axe de rotation de suspension (118) de l'actionneur (88) et la roue de friction (104) et repose par sa première extrémité contre une surface d'appui (124) disposée de manière solidaire par rapport à l'unité de bordure, de pavage ou de bord de trottoir (34) et repose par sa seconde extrémité contre un support (106) de l'actionneur (88).

10. Dispositif de recharge en bordure, pavage ou bord de trottoir (18) pour recharger un accumulateur d'énergie (30) d'un véhicule à propulsion électrique (32) selon la revendication 9,
**caractérisé en ce que**
la surface d'appui (124) est réalisée sur une pièce de suspension (116), qui est fixée sur le couvercle de protection (40) et qui comporte deux plaques de palier (114), par l'intermédiaire desquelles l'axe de rotation de suspension (118) est monté des deux côtés.

11. Dispositif de recharge en bordure, pavage ou bord de trottoir (18) pour recharger un accumulateur d'énergie (30) d'un véhicule à propulsion électrique (32) selon l'une des revendications 7 à 10,
**caractérisé en ce que**
deux roues de friction (104) sont disposées sur l'arbre de sortie (102), lesquelles sont contraintes à force contre la surface de paroi (66) en forme d'arc de cercle de la partie pivotante (58) et deux ressorts (122) sont disposés entre l'axe de rotation de suspension (118) de l'actionneur (88) et les roues de friction (104), qui reposent chacun par leur première extrémité contre une surface d'appui (124) disposée de manière solidaire par rapport à l'unité de bordure, de pavage ou de bord de trottoir (34) et par leur seconde extrémité contre un support (106) de l'actionneur (88), dans lequel les roues de friction (104) et les ressorts (122) sont disposés symétriquement par rapport à un axe central (109) de l'actionneur (88).

12. Dispositif de recharge en bordure, pavage ou bord de trottoir (18) pour recharger un accumulateur d'énergie (30) d'un véhicule à propulsion électrique (32) selon l'une des revendications 7 à 11,
**caractérisé en ce que**
la prise de recharge (24) est fixée sur un élément de réception de prise (72) de la partie pivotante (58), lequel est disposé dans un évidement (71) de la surface de paroi (66) en forme d'arc de cercle, lequel est disposé dans une première section (70) de la surface de paroi (66) en forme d'arc de cercle qui, dans l'état fermé, est disposée le plus près de l'élément de couvercle (60), dans lequel l'élément de réception de prise (72) s'étend perpendiculairement à l'élément de couvercle (60) de la partie pivotante (58).

13. Dispositif de recharge en bordure, pavage ou bord de trottoir (18) pour recharger un accumulateur d'énergie (30) d'un véhicule à propulsion électrique (32) selon l'une des revendications précédentes,
**caractérisé en ce que**
un actionneur de verrouillage (134) est disposé sur la partie pivotante (58), par l'intermédiaire duquel une goupille de verrouillage (136) peut être déplacée, laquelle peut être rétractée dans la position totalement déployée dans une ouverture correspondante (138) d'un composant (139) disposé de manière solidaire par rapport à l'unité de bordure, de pavage ou de bord de trottoir (34).

14. Dispositif de recharge en bordure, pavage ou bord de trottoir (18) pour recharger un accumulateur d'énergie (30) d'un véhicule à propulsion électrique (32) selon l'une des revendications précédentes,
**caractérisé en ce que**
un aimant (142) est fixé sur la partie pivotante (58), qui correspond à un capteur magnétorésistif (144) ou à un commutateur, qui est disposé de manière solidaire dans l'espace de réception (38) par rapport à l'unité de bordure, de pavage ou de bord de trottoir (34).

15. Dispositif de recharge en bordure, pavage ou bord de trottoir (18) pour recharger un accumulateur d'énergie (30) d'un véhicule à propulsion électrique (32) selon la revendication 12,
**caractérisé en ce que**
la partie pivotante (58) comporte l'élément de réception de prise (72), l'élément de couvercle (60), deux parois latérales (68) opposées l'une à l'autre et la surface de paroi (66) en forme d'arc de cercle dans la section transversale, dans lequel l'ouverture (54) dans le couvercle de protection (40) est fermée dans les deux positions finales en intercalant des joints d'étanchéité (65, 132).
